Europäisches Patentamt

(19) European Patent Office

Office européen des brevets

(11) Veröffentlichungsnummer: **0 032 246**
A2

(12) # EUROPÄISCHE PATENTANMELDUNG

(21) Anmeldenummer: 80108248.8

(51) Int. Cl.³: **C 09 K 5/00**

(22) Anmeldetag: 30.12.80

(30) Prioritat: 10.01.80 DE 3000687

(43) Veröffentlichungstag der Anmeldung:
22.07.81 Patentblatt 81'29

(84) Benannte Vertragsstaaten:
DE FR GB IT SE

(71) Anmelder: BASF Aktiengesellschaft
Carl-Bosch-Strasse 38
D-6700 Ludwigshafen(DE)

(72) Erfinder: Barthold, Klaus, Dr.
Mundenheimer Strasse 18-20
D-6700 Ludwigshafen(DE)

(72) Erfinder: Liebold, Gert, Dr.
Hundert Morgen 37
D-6803 Edingen(DE)

(54) Kühlerschutzmittel für wasserhaltige Kühlflüssigkeiten.

(57) Kühlerschutzmittel für wasserhaltige Kühlflüssigkeiten auf Basis Äthylenglykol oder Propylenglykol, das frei von Nitriten, Aminen und Phosphaten ist und einen Gehalt von 0,05 bis 5 Gew.%, bezogen auf das Glykol an einer im Kern substituierten Benzoesäure mit einem $pK_a$-Wert $<3$ aufweist.

EP 0 032 246 A2

Croydon Printing Company Ltd.

BASF Aktiengesellschaft

O.Z. 0050/034222

Kühlerschutzmittel für wasserhaltige Kühlflüssigkeiten
─────────────────────────────────────────────────────

Die Erfindung betrifft Kühlerschutzmittel auf Ätyhlenglykol- oder Propylenglykol-Basis mit verbessertem Korrosionsschutz. Kühlerschutzmittel auf Basis-Äthylenglykol sind im wesentlichen durch die Art der Inhibierung gekennzeichnet. Je nach Inhibitorhauptbestandteil unterscheidet man Zusätze auf

a) Alkali-Phosphatbasis

b) Natriumbenzoat-Natriumnitrit-Basis

c) Alkanolaminphosphat-Basis

Ferner wird häufig Borax zur Einstellung der Reservealkalität zugesetzt sowie weitere Inhibitoren wie Silikate, Nitrate, Benzotriazol und Benzothiazol.

Kühlerschutzmittel auf Alkaliphosphatbasis haben in Europa keine Bedeutung, weil sie bei hochbelasteten Motoren Leichtmetallen ungenügenden Korrosionsschutz geben.

Deshalb werden hier vorweigend Kühlerschutzmittel mit Inhibitoren auf Natriumbenzoat-Basis verwendet, die neben Borax meist noch Silikat und Benzotriazol enthalten. Im allgemeinen erfüllen diese Handelsprodukte weitgehend die technologischen Anforderungen des heutigen Marktes.

Kühlerschutzmittel mit Inhibitoren auf Alkanolaminphosphat--Basis werden zum Teil in Deutschland, bevorzugt jedoch in England und in den skandinavischen Ländern, verwendet. Sie haben den Nachteil der Unverträglichkeit mit hartem Wasser wegen der Ausfällung von Calciumphosphat. Ebenso ist der Korrosionsschutz gegenüber Eisen und seinen Legierungen ungenügend, wenn entsprechnede Bauteile des Motors ther-

Hp/BL

misch stark belastet werden. Die Folge ist eine Ausfällung von Eisenphosphat; dadurch verschlechtert sich der Wärmeübergang.

Wenn man nun Kühlerschutzmittel mit Inhibitoren gemäß (b) und (c) miteinander mischt, wie dies in Praxis oft geschieht, so können giftige Nitroso-Verbindungen entstehen.

Es bestand daher die Aufgabe, Kühlerschutzmittel auf Äthylenglykolbasis so zu inhibieren, daß sie mit beliebigen anderen Kühlerschutzmitteln auf Äthylenglykol-Basis mischbar sind, wobei der Inhibitor-Anteil weder Nitrit noch Amine oder Phosphat enthält und das Kühlerschutzmittel eine gute die Korrosion verhindernde Wirkung hat.

Obgleich Kühlerschutzmittel ohne Nitritzusatz bisher nicht die Anforderungen bezüglich des Korrosionsschutzes, insbesondere an Aluminium erfüllen, wurde nun überraschenderweise gefunden, daß bei Ersatz von Natriumnitrit durch Derivate der Benzoesäure mit stark elektronenziehenden Gruppen Kühlerschutzmittel erhalten werden, die den gestellten oben genannten Anforderungen genügen. Demgemäß besteht die Erfindung in Kühlerschutzmitteln für wasserhaltige Kühlflüssigkeiten auf Basis Äthylenglyklol oder Propylenglykol, die frei von Nitriten, Aminen und Phosphaten sind mit einem Gehalt von 0,05 bis 5 Gew.% bezogen auf das Glykol einer im Kern substituierten Benzoesäure mit einem $pK_a$-Wert kleiner 3.

Benzoesäuren mit einem $pK_a$-Wert kleiner 3 sind z.B. solche mit Nitro-Hydroxy- und Halogen-Substituenten. Davon sind die Nitrobenzoesäuren insbesondere die ortho- und para--Nitrobenzoesäure bevorzugt.

Man setzt diese Säuren vorzugsweise in Mengen von 0,5 bis 2,5 Gew.%, bezogen auf das Glykol zu und erhält einen hervorragenden Korrosionsschutz. Es hat sich dabei gezeigt, daß die aromatisch gebundene Nitrogruppe chemisch stabil ist. Bei Vermischung mit Kühlerschutzmitteln, die Alkanolaminphosphate enthalten, entstehen keine Nitrosamine.

Aus der DE-AS 14 92 522 und der US-PS 2 197 774 ist schon die Verwendung von Nitrophenolen als Inhibitorbestandteile beschrieben worden. Durch diese Vorliteratur wird jedoch weder die Verwendung von Nitrobenzoesäuren nahegelegt noch wird mit Nitrophenolen eine auch nur annähernd vergleichbare Wirkung erzielt wie sich aus den unten angegebenen Vergleichsversuchen ergibt.

Das Korrosionsverhalten der neuen Formulierungen wurde im ASTM D 1384-70-Test sowie in einem modifizierten Heißfingertest nach BS 5117 geprüft und mit den unten angegebenen Produkten A bis F verglichen. In dem Heißfingertest, kurz HF-Test genannt, wird unter Überdruck eine 20 bis 25 vol.-%ige Lösung des Kühlerschutzmittels in Wasser auf $130^\circ$C für 120 Stunden erhitzt. Das zum Verdünnen verwendete Wasser enthält jeweils 100 ppm Chlorid, Sulfat und Hydrogencarbonat. Die Aufheizung erfolgt durch zwei Metallfinger von jeweils 60 cm$^2$ Oberfläche, die eine Heizpatrone von 400 Watt enthalten. Die Heißfinger bestehen aus AlCuMg2 und Grauguß. Im Kolben befinden sich die ASTM-Metalle sowie zusätzlich AlMn, AlSi12, AlSi10Mg. Die erfindungsgemäßen Beispiele (a) bis (c) wurden dabei mit folgenden Kühlerschutzmitteln verglichen:

A = Produkt gemäß Spezifikation British Standard 3151 mit Inhibitorsystem auf Basis Natriumbenzoat/Natriumnitrit

B = Produkt gemäß Spezifikation British Standard 3152 mit Inhibitorsystem auf Triäthanolaminphosphatbasis

C = Kühlerschutzmittel gemäß Beispiel 1 der DE-AS 14 92 522

D = Kühlerschutzmittel gemäß US-PS 2 197 774, Formula I in Gew. 0,5 Pikrinsäure

$\qquad$ 0,3 Ammonmolybdat

$\qquad$ 0,5 Na-Carbonat

$\qquad$ 0,3 Na-Nitrat Rest MEG.

E,F = Handelsübliches Kühlerschutzmittel auf Basis Benzoat/Nitrit Gew.% 5,0 Na-Benzoat

$\qquad$ 0,5 Na-Nitrit Rest MEG

Erfindungsgemäße Kühlmittel:

Beispiel (a)    1,0 % p-Nitrobenzoesäure

$\qquad$ 2,5 % Natriumbenzoat

$\qquad$ 1,4 % Borax . 10 $H_2O$

$\qquad$ 0,05 % $Na_2SiO_3$ . 5 $H_2O$

$\qquad$ 0,1 % $NaNO_3$

$\qquad$ 94,9 % Äthylenglykol

$\qquad$ 99,95

Beispiel (b)    2,0  % p-Nitrobenzoesäure
3,0  % Natriumbenzoat
0,7  % Borax . 10 $H_2O$
0,05 % $Na_2SiO_3$ . 5 $H_2O$
0,05 % Natriumnitrat
0,07 % Benzotriazol
94,15 % Äthylenglykol
100,02

Beispiel (c)    0,05 % o/p-Nitrobenzoesäure (1:1)
2,5  % Natriumbenzoat
2,0  % Borax . 10 $H_2O$
0,05 % $K_2SiO_3$
0,1  % $NaNO_3$
2,0  % Wasser
93,70 % Äthylenglykol
100,00

I. Korrosionsversuche nach ASTM D 1384-70
Konzentration des Kühlerschutzmittels in Wasser:
33 Vol.-%
Angaben in mg/cm$^2$

|  | Cu | Wl | Ms | St | GG | G-Ae |
|---|---|---|---|---|---|---|
| A | -0,06 | -0,20 | -0,02 | -0,01 | +0,03 | +0,22 |
| B | -0,05 | -0,25 | -0,03 | -0,01 | +0,03 | -0,10 |
| C | -0,46 | +0,06 | -0,30 | +0,04 | +0,03 | -0,30 |
| D | -0,15 | -0,01 | -0,17 | -0,01 | +0,02 | -0,32 |
| E | -0,01 | -0,04 | -0,01 | -0,01 | -0,01 | -0,06 |
| F | -0,01 | -0,09 | -0,16 | ±0,00 | -0,58 | +0,02 |
| Beispiel (a) | -0,07 | -0,03 | -0,06 | -0,01 | +0,07 | +0,02 |
| Beispiel (b) | ±0,00 | ±0,00 | -0,03 | +0,01 | +0,04 | +0,02 |
| Beispiel (c) | -0,08 | +0,01 | ±0,00 | +0,02 | -0,07 | -0,30 |

II. Korrosionsversuche nach ASTM D 1384-70
Konzentration des Kühlerschutzmittels in Wasser:
20 Vol.-%
Angaben in mg/cm$^2$

|  | Cu | Wl | Ms | St | GG | G-Al |
|---|---|---|---|---|---|---|
| A | -0,12 | -0,50 | -0,06 | -0,08 | +0,10 | -0,20 |
| B | -0,10 | -0,65 | -0,08 | -0,10 | +0,10 | -0,18 |
| C | -0,80 | -0,25 | -0,45 | +0,06 | +0,06 | -0,65 |
| D | -0,42 | -0,08 | -0,32 | -0,12 | +0,08 | -1,10 |
| E | -0,01 | -0,04 | -0,01 | -0,01 | -0,78 | -0,75 |
| F | -0,01 | -0,19 | -0,36 | +0,00 | -1,12 | -0,52 |
| Beispiel (a) | +0,02 | -0,01 | +0,00 | -0,05 | -0,21 | +0,03 |
| Beispiel (b) | +0,00 | -0,07 | -0,17 | +0,00 | +0,03 | -0,09 |
| Beispiel (c) | -0,13 | +0,00 | -0,28 | -0,14 | -0,32 | -0,29 |

III. Heißfinger-Test

III. a) 25 Vol.-%ige Lösung des Kühlerschutzmittels in ASTM-Wasser

|  | Cu | Wl | Ms | St | GG | Al | AlMn | AlSi12 | AlSi10Mg |
|---|---|---|---|---|---|---|---|---|---|
| A | +0,03 | -0,10 | -0,08 | -0,04 | -0,10 | -0,12 | -0,15 | -0,20 | -0,18 |
| E | +0,03 | -0,02 | -0,07 | -0,05 | -0,02 | -0,01 | -0,01 | -0,02 | -0,02 |
| Beispiel (a) | +0,01 | -0,01 | -0,05 | -0,02 | -0,01 | -0,01 | -0,01 | -0,02 | -0,02 |
| Beispiel (b) | +0,01 | -0,01 | -0,03 | -0,02 | -0,01 | -0,01 | -0,01 | -0,02 | -0,02 |
| Beispiel (c) | +0,03 | -0,02 | -0,05 | -0,02 | -0,01 | +0,02 | +0,01 | -0,02 | -0,04 |

III. b) 20 Vol.-%ige Lösung des Kühlerschutzmittels in ASTM-Wasser

|  | Cu | Wl | Ms | St | GG | Al | AlMn | AlSi12 | AlSi10Mg |
|---|---|---|---|---|---|---|---|---|---|
| A | -0,10 | -0,30 | -0,12 | -0,08 | -0,18 | -0,20 | -0,22 | -0,28 | -0,25 |
| E | -0,10 | -0,20 | -0,04 | -0,25 | -0,04 | -0,10 | -0,10 | -0,15 | -0,15 |
| Beispiel (a) | -0,10 | -0,05 | -0,04 | -0,12 | -0,04 | -0,04 | -0,08 | -0,10 | -0,10 |
| Beispiel (b) | -0,10 | +0,05 | -0,04 | -0,09 | -0,04 | -0,04 | -0,05 | -0,07 | -0,08 |
| Beispiel (c) | -0,08 | -0,05 | -0,04 | -0,15 | -0,06 | -0,06 | -0,10 | -0,12 | -0,13 |

Patentansprüche

1. Kühlerschutzmittel für wasserhaltige Kühlflüssigkeiten auf Basis Äthylenglykol oder Propylenglykol, dadurch gekennzeichnet, daß es frei von Nitriten, Aminen und Phosphaten ist und einen Gehalt von 0,05 bis 5 Gew.%., bezogen auf das Glykol an einer im Kern substituierten Benzoesäure mit einem $pK_a$-Wert$<3$ aufweist.

2. Kühlerschutzmittel gemäß Anspruch 1, dadurch gekennzeichnet, daß es para- und/oder ortho-Nitrobenzoesäure enthält.

3. Kühlerschutzmittel gemäß Anspruch 1, dadurch gekennzeichnet, daß der Gehalt an para- und/oder ortho-Nitrobenzoesäure 0,5 bis 2,5 Gew.% bezogen auf das Glykol beträgt.